# EUROPEAN PATENT APPLICATION

(11) **EP 4 737 664 A1**
(43) Date of publication of application: **06.05.2026**
(21) Application number: 24210150.9
(22) Date of filing: 31.10.2024
(51) Int. Cl.: E04D 11/00, E04G 21/32, E04F 11/18

(54) **FLAT ROOF WITH PHOTOVOLTAIC MODULES AND FALL PROTECTION**

(71) Applicant: REG.LAS Schweiz AG, 6017 Ruswil (CH)
(72) Inventor: GRÜTER, Josef-Urs, 6017 Ruswil (CH)
(74) Representative: Grünecker Patent- und Rechtsanwälte PartG mbB

(57) **Abstract**

A flat roof (1) on a building (2) comprises a support structure (4) extending along a roof panel (5), a first mounting structure (6) connected to the support structure in (4) a central area (7) of the flat roof (1), one or more photovoltaic modules (8) mounted on the first mounting structure (6), and a fall protection structure (9) connected to the support structure (4) in a peripheral area (10) of the flat roof (1). The fall protection structure (9) is in a distance (210) to the one or more photovoltaic modules (8) mounted on the first mounting structure (6).

## Description

The invention relates to a flat roof on a building according to the preamble of claim 1 and to a use of one or more photovoltaic modules for fall protection according to claim 15.

Generally, a flat roof may cover a building. A flat roof may have an inclination of up to 10 degrees with respect to a surface normal of a wall of the building. Alternatively, a flat roof may have an inclination of up to 10 degrees with respect to the vertical direction.

EP3564599A1 discloses a flat roof with an end wall at the edge of the building and inclined inner and outer solar converters.

It may be necessary for a person to access the flat roof of a building, for example for working on the flat roof. In this case, a fall protection at the edges of the flat roof may be necessary according to the standard SN EN 13374. The fall protection may have three parts, in particular three rails, such as a handrail, a central rail and a foot rail. The fall protection may have posts, wherein the distance between two posts may have to be smaller than 250 centimeters.

The present invention is directed to the problem of providing flat roof having fall protection in an efficient manner.

The objective technical problem is solved by a flat roof according to claim 1 or by using one or more photovoltaic modules according to claim 15.

According to the first aspect of the invention, a flat roof on a building comprises a support structure extending along a roof panel, a first mounting structure connected to the support structure in a central area of the flat roof, one or more photovoltaic modules mounted on the first mounting structure, and a fall protection structure connected to the support structure in a peripheral area of the flat roof. The fall protection structure is in a distance to the one or more photovoltaic modules mounted on the first mounting structure.

The flat roof may generally have a width of at least 5 meters and/or a length of at least 5 meters, preferably a width of at least 10 meters and a length of at least 5 meters. The flat roof may have a static layer, in particular comprising or being entirely made of metal, concrete or wood. The flat roof may have a roof skin covering the static layer. The roof skin may comprise roof panels, in particular comprising or consisting of galvanized steel, zinc, copper, aluminum, lead or stainless steel. Additionally or alternatively, the roof skin may comprise or may be entirely made of concrete, sheet metal, roofing felt, roofing film, acrylic glass or other transparent materials, bulk material or organic material such as plants, in particular wood.

The flat roof, in particular a surface of the flat roof such as the roof skin, may extend at least locally or entirely in a plane, in particular a horizontal plane or in a horizontal direction. The vertical direction may be at an angle of up to 90 degrees, in particular at an angle between 80 degrees and 90 degrees, to the surface plane of the flat roof. The vertical direction may be at an angle of maximally 10 degrees, in particular parallel, to an outer wall of the building. The vertical direction may be at an angle of up to 10 degrees to the surface normal of at least a portion of the surface of the flat roof.

The distance between the fall protection structure and the one or more photovoltaic modules mounted on the first mounting structure may be at least 50 centimeters, in particular at least 100 centimeters, in particular at least 150 centimeters. The fall protection structure may be entirely arranged on the flat roof. In particular, the fall protection structure is not directly connected with a wall of the building or with a border element. The one or more photovoltaic modules mounted on the first mounting structure may be arranged at an angle between 0 degrees and 10 degrees with respect to the vertical direction.

The size of the peripheral area may depend on the flat roof, in particular the size and/or geometry of the flat roof. The peripheral area of the flat roof may comprise the outer 20 percent, in particular the outer 15 percent, in particular the outer 10 percent, of the width and/or of the length of the flat roof. Alternatively, the peripheral area may extend at least 1 meter, in particular at least 2 meters, in particular at least 3 meters from the nearest edge of the flat roof. The peripheral area of the flat roof may at least partially enclose the central area of the flat roof.

The flat roof, in particular the fall protection structure, may be adapted to allow at least one person to carry out maintenance. The flat roof may be adapted to be sustainable, economical and/or efficient. The flat roof may be adapted to improve fall protection for at least one person on the flat roof or in vicinity of the building. The flat roof, in particular the fall protection structure, may protect or prevent a person from, in particular accidentally, falling from the flat roof. The fall protection structure may be adapted to protect or prevent objects from falling from the flat roof, in particular wherein falling objects endanger a person in vicinity of the building. The fall protection structure may be adapted to be non-removable, in particular non-relocatable, non-slidable or non-displaceable. The support structure may be adapted to be arranged on a surface of the flat roof.

The fall protection structure may have a height of at least 80 centimeters, preferably at least 90 centimeters, more preferably at least 100 centimeters, more preferably at least 110 centimeters. The fall protection structure may have a height of less than 200 centimeters, in particular less than 170 centimeters, in particular less than 150 centimeters, in particular less than 130 centimeters.

The one or more photovoltaic modules may be arranged at a first angle from 45 degrees to 90 degrees, in particular 80 degrees to 90 degrees, with respect to a horizontal direction or the roof panel. The one or more photovoltaic modules may be arranged to reduce the risk of objects, in particular aerosols, dust particles, sand particles, snow or hail, being deposited on the photovoltaic modules. The one or more photovoltaic modules may be arranged to convert energy from light reflections or scattered light to electrical energy.

The fall protection structure may comprise a second mounting structure and one or more photovoltaic modules mounted on the second mounting structure. In particular, the second mounting structure and/or the one or more photovoltaic modules mounted on the second mounting structure are at least partially arranged in the peripheral area. The flat roof, in particular the fall protection structure, may be adapted to allow for using one or more photovoltaic modules as collective protection and/or as fall protection.

The support structure may be adapted and/or arranged to allow for anchoring the fall protection structure to the flat roof. The support structure may be adapted and/or arranged to allow for arranging flat roof components such as skylights, stairs or chimneys, on the flat roof. The first mounting structure and/or second mounting structure may be fixed, in particular removably fixed, in particular bolted or clamped, to the support structure. Alternatively, the first mounting structure and/or the second mounting structure may be integral or irremovably connected with the support structure.

The one or more photovoltaic modules mounted on the second mounting structure may be arranged at a second angle from 20 degrees to 70 degrees, in particular 40 degrees to 70 degrees, in particular 20 degrees to 50 degrees, preferably 40 degrees to 50 degrees, with respect to the horizontal direction. The second mounting structure may be adapted and/or arranged to increase the electrical power output of the one or more photovoltaic modules mounted on the second mounting structure. The second mounting structure may be adapted and/or arranged to reduce wind load on the one or more photovoltaic modules mounted on the second mounting structure.

The one or more photovoltaic modules mounted on the second mounting structure may be less inclined regarding a horizontal plane than the one or more photovoltaic modules mounted on the first mounting structure. This enables that the one or more photovoltaic modules mounted on the second mounting structure guide wind over the one or more photovoltaic modules mounted on the first mounting structure, which are beneficially arranged, in particular in an upright configuration, for generating electricity in the mornings and/or evenings.

Alternatively, the one or more photovoltaic modules mounted on the second mounting structure may be arranged between 70 degrees and 90 degrees with respect to a horizontal direction.

The support structure may be at least partially or fully covered, in particular by organic material or bulk material, such as gravel, sand or soil, or horizontal panels. The support structure may be at least partially or fully covered by a fabric layer, in particular by a fleece layer. Alternatively, the support structure may at least partially cover the fabric. The organic material may be plant-based or may comprise plants, wherein plants may secure bulk material or plant-based material. The support structure may be adapted and/or arranged to allow for anchoring the fall protection structure to the flat roof.

The fall protection structure may be arranged above and in distance to a border element of the flat roof, in particular less than 47 centimeters, in particular less than 30 centimeters above the border element. In particular, the distance is larger than 1 centimeter. The fall protection structure may be arranged and/or adapted to reduce wind load on the one or more photovoltaic modules of the fall protection structure.

In particular, the fall protection structure is not directly connected with the border element. The border element may be in the form of a metal sheet or wood beam. The wall of the building may at least partially form the border element. The border element may extend above or beyond the flat roof. The border element may extend at least 5 centimeters, in particular at least 15 centimeters, from the flat roof in the vertical direction. The fall protection structure may comprise a handrail, a central rail and/or a base rail. The distance between the handrail and the central rail may be less than 47 centimeters. The distance between the central rail and the foot rail may be less than 47 centimeters. The handrail, central rail or base rail may at least partially enclose the central area of the flat roof. The fall protection structure may vertically extend at least 100 centimeters, in particular at least 110 centimeters from a roof panel.

The fall protection structure may be in a distance of less than 100 centimeters from a nearest edge of the flat roof. The fall protection structure may extend parallel to the edge of the flat roof. The fall protection structure may be adapted and/or arranged to allow for access to the peripheral area of the flat roof, in particular a rain gutter of the flat roof. The fall protection structure may be arranged and/or adapted to allow a person on a flat roof to carry out maintenance. For example, the person may need to clean the one or more photovoltaic modules of the fall protection structure or the person may need to clean a rain gutter at the edge of the flat roof. The fall protection structure may be arranged to prevent blocking the central area. The fall protection structure may at least partially enclose at least a portion of the central area.

The flat roof may form a closed surface free of any connection openings for the support structure. In particular, the flat roof forms a closed surface without the penetration of the skin of the flat roof. Alternatively, the flat roof, in particular in the form of a metal roof, preferably tin roof, may comprise receptacles for receiving fastening elements such as screws or bolts. The support structure may extend into a central area of the flat roof. The support structure may extend in between the peripheral area at opposite edges of the flat roof. The support structure may at least extend across the central area, in particular maximally from one edge to an opposite edge of the flat roof. The fall protection structure may comprise one or more attachment points for attaching personal protective equipment of a person. Two parallel mounting structures may be arranged at a distance of less than 250 cm, in particular less than 200 cm.

At least one or all of the support structure and the mounting structure may be assembled from profiled beam elements. The profiled beam elements may be made of wood or metal, in particular steel, stainless steel or aluminum. Alternatively, the profiled beam elements may be made of synthetic material, in particular carbon fibers or polymers, in particular rubber, polyvinyl chloride, polypropylene, polystyrene or polycarbonate. At least two profiled beam elements of the fall protection structure may be connected via screws or bolts. In particular, the mounting structure comprises a frame structure. In particular, one or more photovoltaic modules are mounted, in particular clamped or bolted, on the frame structure.

The mounting structure may comprise parallel vertical pillar elements, in particular two or more parallel vertical pillar elements, having different heights. A frame structure may be arranged on the vertical pillar elements, such that the frame structure is inclined. The frame structure may be arranged at an angle of 20 degrees to 70 degrees, in particular 40 degrees to 70 degrees, in particular 20 degrees to 50 degrees, preferably 40 degrees to 50 degrees, with respect to a horizontal direction. The first and/or second mounting structure may comprise at least a spacer element, in particular contacting a shorter and a longer pillar, in particular wherein the shorter and the longer pillar arranged opposite and/or closest to each other. The spacer element may be adapted to reinforce mounting structure, in particular the two pillars.

A distance element may be arranged in between the mounting structure and the support structure. The distance element may allow for retaining water and/or for draining off water. The distance element may have a vertical extension of 20 millimeters to 100 millimeters, in particular 30 millimeters to 50 millimeters. The distance element may have a wall thickness of 5 millimeters to 15 millimeters.

The mounting structure may comprise a connector structure and a base structure, wherein the connector structure is connected to the support structure and the base structure, wherein the connector structure extends through the distance element and the base structure is arranged on the distance element.

The distance element may comprise water retention structures. This enables to retain water for vegetation and plants on the flat roof. The retention structures may be in the form of recesses, channels and cavities. The recesses may have side lengths in between 50 millimeters and 150 millimeters. Drainage channels may be provided in the distance element, in particular to drain excess water from the water retention structures.

The flat roof, in particular the fall protection structure, the support structure and/or at least one out of the first and second mounting structure, may comprise a guide element for cables. The guide element may be adapted and/or arranged to protect cables from environmental influences, in particular mechanical and/or weather-related influences.

According to a second aspect of the invention, one or more photovoltaic modules are used for fall protection on a flat roof. The one or more photovoltaic modules are peripherally arranged in a distance of less than 100 centimeters from the edge of the roof and have a height of at least 90 centimeters. The peripheral one or more photovoltaic modules may be arranged as explained regarding the first aspect of the invention. In particular, the peripheral one or more photovoltaic modules are arranged at an angle from 20 degrees to 70 degrees, in particular 40 degrees to 70 degrees, in particular 20 degrees to 50 degrees, preferably 40 degrees to 50 degrees, with respect to a horizontal direction. The inclination of the peripheral one or more photovoltaic modules enables that wind forces on the peripheral one or more photovoltaic modules may be reduced.

The peripheral one or more photovoltaic modules may be combined with further photovoltaic modules arranged in more central area of the roof. The central further photovoltaic modules may be arranged at an angle from 45 degrees to 90 degrees, in particular 80 degrees to 90 degrees, with respect to the horizontal direction or flat roof panel structure. In particular, the peripheral one or more photovoltaic modules may be in an inclined configuration, and the central further photovoltaic modules may be in a further inclined configuration. Thus, the peripheral one or more photovoltaic modules may guide wind over the central further photovoltaic modules.

One or more photovoltaic modules may be used according to claim 15 on a flat roof according to claim 1.

The figures show exemplary embodiments of the invention:
Figure 1 shows a sectional scheme in a side view perspective of an exemplary embodiment of a flat roof on a building.
Figure 2 schematically shows a perspective view of an exemplary embodiment of a flat roof on a building.
Figure 3 schematically shows a portion of an exemplary embodiment of a flat roof on a building in a perspective bottom view.
Figure 4 schematically shows a perspective view of the exemplary embodiment of the flat roof on the building according to Figure 3.

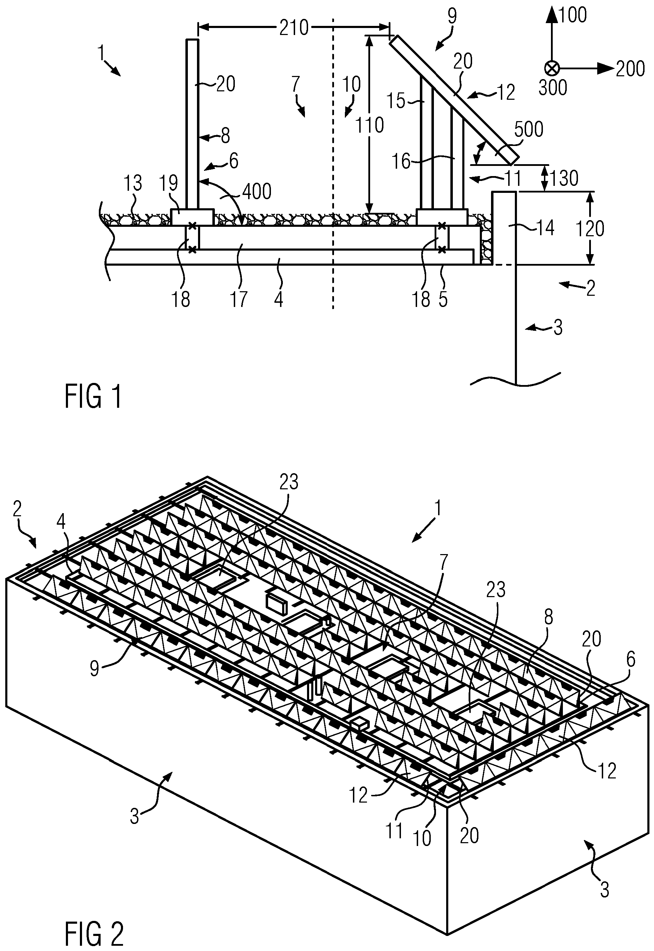

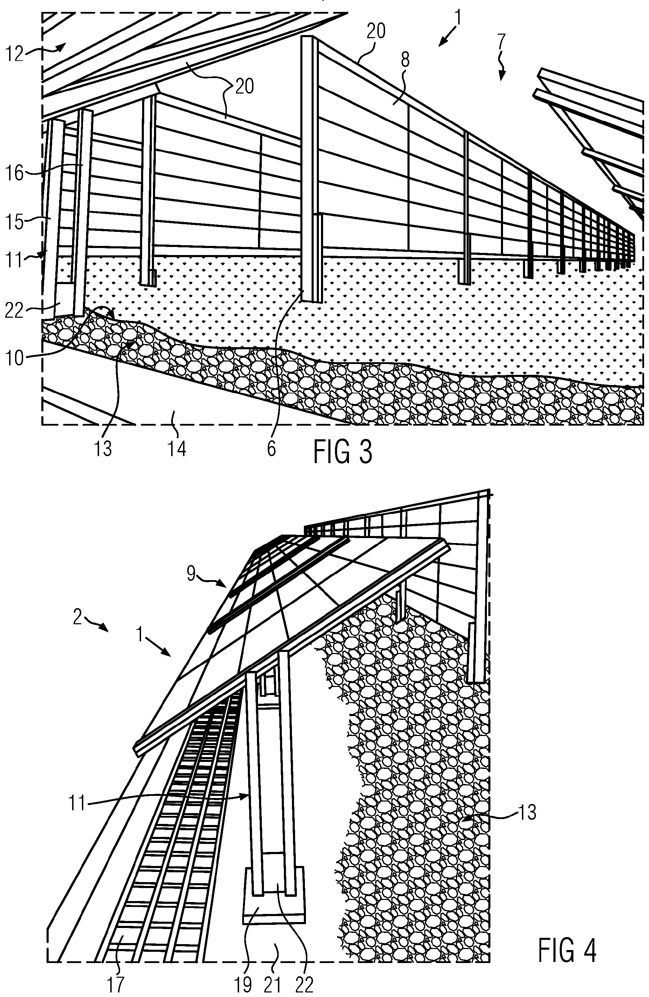

Fig. 1 schematically shows a section of a flat roof 1 on a building 2 with a portion of the wall 3 of the building 2. The flat roof 1 comprises a support structure 4 extending along a roof panel 5. The flat roof 1 comprises a first mounting structure 6 connected to the support structure 4 in a central area 7 of the flat roof 1. One or more photovoltaic modules 8 are mounted on the first mounting structure 6. The photovoltaic modules 8 are arranged at a first angle 400 of 90 degrees with respect to the roof panel 5. A fall protection structure 9 is connected to the support structure 4 in a peripheral area 10 of the flat roof 1. The photovoltaic modules 12 are used for fall protection on a flat roof 1. The fall protection structure 9 is in a distance 210 to the one or more photovoltaic modules 8 mounted on the first mounting structure 6. The fall protection structure 9 has a height 110 of at least 110 centimeters. The fall protection structure 9 comprises a second mounting structure 11 and one or more photovoltaic modules 12 mounted on the second mounting structure 11. The one or more photovoltaic modules 12 mounted on the second mounting structure 11 are arranged at a second angle 500 of 45 degrees with respect to the horizontal direction. The support structure 4 is fully covered by bulk material 13 in the form of gravel. The fall protection structure 9 is arranged above and in a distance 130 to a border element 14 of the flat roof 1. The distance 130 of the fall protection structure 9 to the border element 14 of the flat roof 1 is less than 47 centimeters. The border element 14 has a height 120 of at least 5 centimeters. The fall protection structure 9 is in a distance 130 of less than 100 centimeters from the nearest edge of the flat roof 1. The flat roof 1 forms a closed surface free of any connection openings for the support structure 4. The support structure 4 and the mounting structures 6, 11 are assembled from profiled aluminum beam elements. The mounting structure 11 comprises parallel vertical pillar elements 15, 16 having different heights. The distance element 17 is arranged in between the mounting structures 6, 11 and the support structure 4. The mounting structures 6, 11 comprise a connector structure 18 and a base structure 19. The connector structure 18 is connected to the support structure 4 and the base structure 19. The connector structure 18 extends through the distance element 17. The base structure 19 is arranged on the distance element 17. The distance element 17 comprises water retention structures in the form of recesses shown in Fig. 4. The water retained in the water retention structures enables to support vegetation and plants on the flat roof. The mounting structure 6, 11 comprises a frame structure 20.

Fig. 2 schematically shows a perspective view of a building 2 with a flat roof 1 and walls 3. The fall protection structure 9 is arranged in a peripheral area 10 of the flat roof 1. The fall protection structure 9 has photovoltaic modules 12 mounted on a second mounting structure 11. The mounting structure 6 is arranged in a central area 7 of the flat roof 1. The support structure 4 extends at least partially across the central area 7. In the central area 7, photovoltaic modules 8 are mounted to frame structures 20 of the mounting structure 6. The photovoltaic modules 12 are mounted to a frame structure 20 of the mounting structure 11. Flat roof elements 23 in the form of skylights are arranged in the central area 7 of the flat roof 1. In Fig. 2, bulk material 13 covering the support structure 4 is not shown.

Fig. 3 schematically shows a portion of a flat roof 1 in a perspective bottom view. The flat roof 1 has a central area 7 and a peripheral area 10. In the central area 7, the mounting structure 6 has a mounting frame 20. Photovoltaic modules 8 are mounted to the mounting frame 20. In the peripheral area 10, the mounting structure 11 has a frame structure 20. Photovoltaic modules 12 are mounted to the frame structure 20. The mounting structure 11 comprises pillars 15, 16 having different heights. A spacer element 22 is in contact with a pillar 15 and with a pillar 16 wherein the pillar 15 is shorter than the pillar 16. In Fig. 3, the support structure 4 is hidden by bulk material 13 in the form of gravel and soil. The flat roof 1 is enclosed by a border element 14.

Fig. 4 schematically shows a perspective view of the exemplary embodiment of the flat roof 1 on a building 2 as shown in Fig. 3. In Fig. 4, the distance element 17 is not covered by bulk material 13 for illustrative purposes. The distance element 17 is partially covered by a fleece layer 21. A base structure 19 is arranged between the fleece layer 21 and the mounting structure 11. Although not shown in Figs. 3 and 4, the fall protection structure 9 comprises a handrail, a central rail or a base rail.

### Reference signs

- 1: Flat roof
- 2: building
- 3: wall
- 4: support structure
- 5: roof panel
- 6: first mounting structure
- 7: central area
- 8: photovoltaic module
- 9: fall protection structure
- 10: peripheral area
- 11: second mounting structure
- 12: photovoltaic module
- 13: bulk material
- 14: border element
- 15: pillar element
- 16: pillar element
- 17: distance element
- 18: connector structure
- 19: base structure
- 20: frame structure
- 21: fleece layer
- 22: spacer element
- 23: flat roof element
- 100: vertical direction
- 110: height of fall protection structure
- 120: height of border element
- 130: distance
- 200: horizontal direction
- 300: horizontal direction
- 210: distance
- 220: distance
- 400: first angle
- 500: second angle

## Claims

1. Flat roof (1) on a building (2), comprising:
a support structure (4) extending along a roof panel (5),
a first mounting structure (6) connected to the support structure (4) in a central area (7) of the flat roof (1),
one or more photovoltaic modules (8) mounted on the first mounting structure (6), and
a fall protection structure (9) connected to the support structure (4) in a peripheral area (10) of the flat roof (1),
wherein the fall protection structure (9) is in a distance (210) to the one or more photovoltaic modules (8) mounted on the first mounting structure (6).

2. Flat roof according to claim 1, wherein the fall protection structure (9) has a height (110) of at least 80 centimeters, preferably at least 90 centimeters, more preferably at least 100 centimeters, more preferably at least 110 centimeters.

3. Flat roof according to claim 1 or 2, wherein the one or more photovoltaic modules (8) are arranged at a first angle (400) from 45 degrees to 90 degrees, in particular 80 degrees to 90 degrees, with respect to a horizontal direction or the roof panel (5).

4. Flat roof according to any one of the previous claims, wherein the fall protection structure (9) comprises a second mounting structure (11) and one or more photovoltaic modules (12) mounted on the second mounting structure (11).

5. Flat roof according to claim 4, wherein the one or more photovoltaic modules (12) mounted on the second mounting structure (11) are arranged at a second angle (500) from 20 degrees to 70 degrees, in particular 40 degrees to 70 degrees, preferably 40 degrees to 50 degrees, with respect to a horizontal direction.

6. Flat roof according to any one of the previous claims, wherein the support structure (4) is at least partially or fully covered, in particular by plant-based material or bulk material (13), such as gravel, sand or soil, or horizontal panels.

7. Flat roof according to any one of the previous claims, wherein the fall protection structure (9) is arranged above and in distance (130) to a border element (14) of the flat roof (1), in particular less than 47 centimeters above the border element (14).

8. Flat roof according to any one of the previous claims, wherein the fall protection structure (9) is in a distance (130) of less than 100 centimeters from a nearest edge of the flat roof (1).

9. Flat roof according to any one of the previous claims, wherein the flat roof (1) forms a closed surface free of any connection openings for the support structure (4).

10. Flat roof according to any one of the previous claims, wherein at least one or all of the support structure (4) and the mounting structure (6, 11) is assembled from profiled beam elements.

11. Flat roof according to any one of the previous claims 4 to 10, wherein the mounting structure (11) comprises parallel vertical pillar elements (15, 16) having different heights.

12. Flat roof according to any one of the previous claims, wherein a distance element (17) is arranged in between the mounting structure (6, 11) and the support structure (4).

13. Flat roof according to claim 12, wherein the mounting structure (6, 11) comprises a connector structure (18) and a base structure (19), wherein the connector structure (18) is connected to the support structure (4) and the base structure (19), wherein the connector structure (18) extends through the distance element (17) and the base structure (19) is arranged on the distance element (17).

14. Flat roof according to claim 12 or 13, wherein the distance element (17) comprises water retention structures.

15. Use of one or more photovoltaic modules (12) for fall protection on a flat roof (1), wherein the one or more photovoltaic modules (12) are arranged in a distance (130) of less than 100 centimeters from the edge of the flat roof (1) and have a height (110) of at least 90 centimeters.
